# EUROPEAN PATENT APPLICATION

(11) **EP 3 378 883 A1**
(43) Date of publication of application: **26.09.2018**
(21) Application number: 17162039.6
(22) Date of filing: 21.03.2017
(51) Int. Cl.: C08G 69/26, C08G 69/36, C08J 5/18, B32B 27/34, B32B 5/02, B29C 70/00, C08J 5/04

(54) **THERMOPLASTIC COMPOSITES AND CORRESPONDING FABRICATION METHODS AND ARTICLES**

(71) Applicant: Solvay Specialty Polymers USA, LLC., Alpharetta, GA 30005-3914 (US)
(72) Inventor: FLORES, Joel, Alpharetta, GA Georgia 30004 (US); DESIO, Glenn P., Marietta, GA Georgia 30062 (US)
(74) Representative: Benvenuti, Federica

(57) **Abstract**

Described herein are thermoplastic composites including a polymer matrix, having a at least one semi-crystalline polyphthalamide ("PPA") polymer, and at least one continuous reinforcing fiber. It was surprisingly discovered that incorporation of semi-crystalline PPA polymers, having a selected melt profile, into the polymer matrix provided for crack-free thermoplastic composites. Based at least in part on the semi-crystalline structure of PPA polymers, the thermoplastic composite can have improved tensile strength, chemical resistance and thermal stability, relative to composites incorporating an amorphous PPA polymer. The composites can be formed using melt impregnation techniques, well known in the art. The composites can be desirably used in a wide range of application settings including, but not limited to automotive, aerospace, automotive and oil and gas and mobile electronic device applications.

## Description

### FIELD OF THE INVENTION

The invention relates to thermoplastic composites including a polymer matrix, having a polyphthalamide polymer, and continuous reinforcing fibers. The invention further relates to the fabrication of thermoplastic composites. The invention still further relates articles incorporating the thermoplastic composites.

### BACKGROUND OF THE INVENTION

Thermoplastic composites are gaining a significant amount of attention as a potential replacement for metal parts. Relative to metal parts, thermoplastic composites can provide a significant reduction in weight and cost, while simultaneously providing desirable or superior mechanical performance. One type of polymer used in thermoplastic composites is amorphous polypthalamide ("PPA") polymers. The popularity of amorphous PPA polymers in thermoplastic composites is at least in part due to the fact that they form crack-free composites. However, due to their success to date, thermoplastic composites are being investigated for use in a wider variety of application settings, which require greater mechanical performance *(e.g.* tensile strength) and chemical performance *(e.g.* chemical resistance). In general, for many of these applications settings, amorphous PPA polymers are not able to meet the increased mechanical performance and chemical performance requirements of these new application settings.

### BRIEF DESCRIPTION OF THE DRAWINGS

Fig. 1 is a schematic depiction showing a perspective view of an embodiment unidirectional composite.
Fig. 2 is a schematic depiction showing a perspective view of an embodiment of a multidirectional composite in which the reinforcing fibers are oriented as a woven fabric.
Fig. 3 is a schematic depiction showing a perspective view of an embodiment of a multidirectional composite in which the continuous reinforcing fibers are oriented as a layered fabric.

### DETAILED DESCRIPTION OF THE INVENTION

Described herein are thermoplastic composites including a polymer matrix, having a at least one semi-crystalline polyphthalamide ("PPA") polymer, and at least one continuous reinforcing fiber. It was surprisingly discovered that incorporation of semi-crystalline PPA polymers, having a selected melt profile, into the polymer matrix provided for crack-free thermoplastic composites. In general, fabrication of thermoplastic composites from semi-crystalline PPA polymers results in composites having significant visible cracking, which compromises the mechanical integrity of the composite and makes in undesirable for use in many application settings. Applicant discovered that crack-free thermoplastic composites having a semi-crystalline polymer matrix can be formed from semi-crystalline PPA polymers having a selected inherent viscosity, crystallinity and difference between onset degradation temperature and the melting temperature. Based at least in part on the semi-crystalline structure of PPA polymers, the thermoplastic composite can have improved tensile strength, chemical resistance and thermal stability, relative to composites incorporating an amorphous PPA polymer. The composites can be formed using melt impregnation techniques, well known in the art. The composites can be desirably used in a wide range of application settings including, but not limited to automotive, aerospace, oil and gas and mobile electronic device applications.

### The Polymer Matrix

The polymer matrix includes at least one semi-crystalline PPA polymer and, optionally, at least one additive. It was surprisingly found that semi-crystalline PPA polymers having a selected processing profile provided for crack free thermoplastic composite. The melt profile refers to a combination of properties of the semi-crystalline PPA polymer. The properties are the inherent viscosity ("ηᵢₙₕ"), the crystallinity, and the thermal window. As described in detail below, the crystallinity of the PPA polymers is measured according to the heat of fusion ("ΔH_{f}"). The thermal window refers to the difference in the onset degradation temperature ("Td") and the melting temperature ("Tm") of the PPA polymer, as represented by the following formula : T_{d} - Tₘ.

The thermoplastic composite includes at least 20 wt.%, at least 25 wt.%, at least 30 wt.%, at least 35 wt.% or at least 40 wt.% of the polymer matrix, relative to the total weight of the composite. Additionally or alternatively, the thermoplastic composite includes no more than 80 wt.%, no more than 70 wt.%, no more than 60 wt.%, no more than 55 wt.%, no more than 50 wt.% or no more than 45 wt.% of the polymer matrix, relative to the total weight of the composite.

### The Polyphthalamide Polymer

The polymer matrix includes at least one semi-crystalline PPA polymer. As used herein, a semi-crystalline PPA polymer is a PPA polymer having a heat of fusion that is at least 3 joules per gram ("J/g"). Furthermore, a PPA polymer refers to any polymer including recurring unit (R_{PA}) and recurring unit (R*_{PA}), where the total concentration of recurring unit (R_{PA}) and recurring unit (R*_{PA}) is at least 50 mole percent ("mol%"), relative to the total number of moles of recurring units in the polymer. In some embodiments, the total concentration of recurring unit (R_{PA}) and recurring unit (R*_{PA}) in the PPA polymer is at least 60 mol%, at least 70 mol%, at least 80 mol%, at least 90 mol%, at least 99 mol% or at least 99.5 mol% recurring unit (R_{PA}), relative to the total number of moles of recurring units in the PPA polymer.

Recurring unit (R_{PA}) is represented by the following formula :

[-M_{A}-M_{B}-] (1)

where -M_{A}- and -M_{B}- are represented by the following formulae, respecitvely : 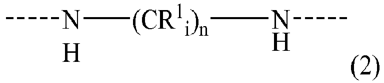 and 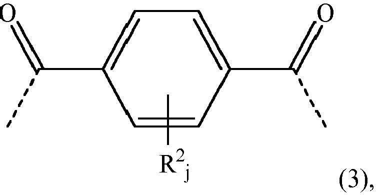 and where R¹ and R², at each instance, is independently selected from the group consisting of a halogen, an alkyl, an alkenyl, an ether, a thioether, an ester, an amide, an imide, an alkali or alkaline earth metal sulfonate, an alkyl sulfonate, an alkali or alkaline earth metal phosphonate, an alkyl phosphonate, an amine, and an quaternary ammonium; i, at each instance, is an integer from 0 to 2; j is an integer from 0 to 4; and n is 4, 6 or 10. As used herein, a dashed bond (----) represents a bond to an atom outside the drawn structure. For clarity, in Formulae (2), the carbon atom in each -(CR¹ᵢ)- has 2 - i hydrogen atoms bonded to it. Similarly, in Formulae (3), the central benzene ring has 4 - j ring carbons bonded to a hydrogen atom. For example, referring to Formula (2), if i = 1 for one of the n units -(CR¹ᵢ)-, -M_{A}-, in one embodiment, is represented by ---NH-(CHR¹)-(CR¹ᵢ)ₙ₋₁-NH---. As another example, referring to Formula (3), if j = 1, 3 of the benzyl carbons are bonded to a hydrogen and one is bonded to R². Analogous notation is used for the other formulae herein.

Recurring unit (R*_{PA}) is represented by either one of following formulae :

[-M*_{A}-M*_{B}-], (4)

and 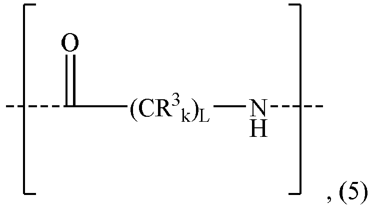 where -M*_{A}- is represented by a formula selected from the following group of formulae : 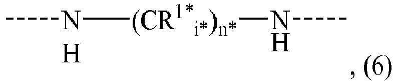 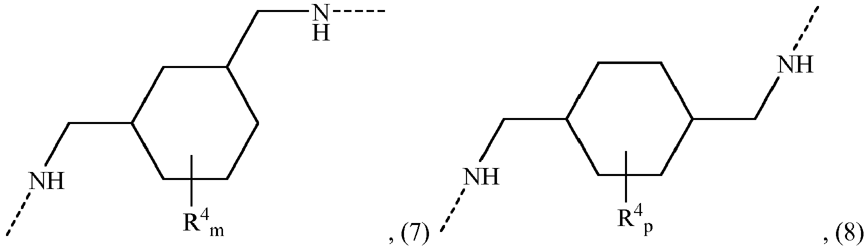 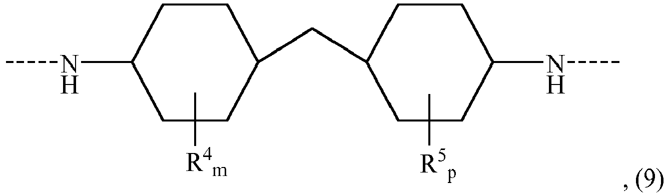 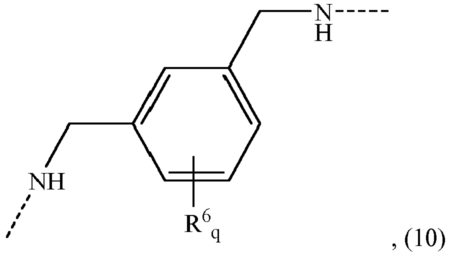 and 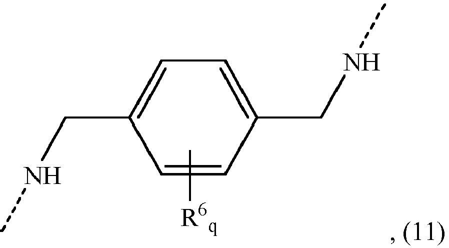 and -M*_{B}- is represented by a formula selected from the following group of formulae :

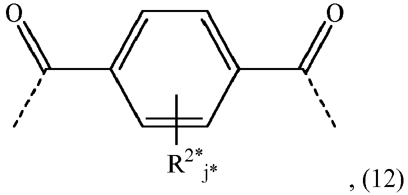

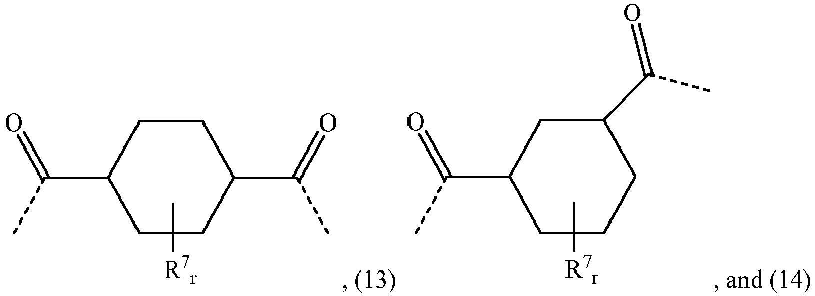

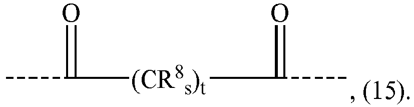

In Formulae (5) to (15), the R^{1*}, R^{2*} and R³ to R⁸, at each instance, is independently selected from the group consisting of a halogen, an alkyl, an alkenyl, an ether, a thioether, an ester, an amide, an imide, an alkali or alkaline earth metal sulfonate, an alkyl sulfonate, an alkali or alkaline earth metal phosphonate, an alkyl phosphonate, an amine, and an quaternary ammonium; i*, k and s, at each instance, are independently selected integers from 0 to 2; L is an integer from 5 to 12; n* is 5 to 7, preferably 4, 6 or 10; t is an integer from 6 to 18; m, p and r are independently selected integers from 0 to 8; and j* and q are independently selected integers from 0 to 4. In some embodiments, each i and j are zero; each i*, j*, k, m, p, q, r and s are zero; or each i, j, i*, j*, k, m, p, q, r and s are zero.

For ease of reference, sometimes, -M_{A}- and -M_{B}- are respectively referred to as a diamine diradical and a dicarboxylic acid diradical. The person of ordinary skill in the art will recognize that H-M_{A}-H and HO-M_{B}-OH are a diamine and a dicarboxylic acid monomer, respectively, and that polycondensation of H-M_{A}-H with HO-M_{B}-OH results in formation of the recurring unit (R_{PA}) (amide bond between -M_{A}- and -M_{B}- and the loss of water). Accordingly, reference to -M_{A}- as a diamine diradical refers to the radical formed by the deprotonation of the terminal -H atoms in the formula H-M_{A}-H. Similarly, reference to -M_{B}- as a dicarboxylic acid diradical refers to the radical formed by the dehydroxylation of the terminal -OH groups in the formula HO-M_{B}-OH. For example, reference to -M_{A}- as a 1,6-hexamethylenediamine diradical refers to Formula (3), where each i is zero and n is 6. As another example, reference to -M_{B}- as a terephthalic acid diradical refers to Formula (3), where j is zero. Analogous terminology is used with respect to -M*_{A}- and -M*_{B}-. Similarly, and again for ease of reference, sometimes groups according to Formula (5) are referred to as amino acid diradicals. The person of ordinary skill in the art will recognize that HO---CO-(CR³ₖ)_{L}-NH---H is an amino acid, and that polycondensation of the aminoacid results in formation of the recurring unit (R*_{PA}) (dehyroxylation and dehydrogenation of the terminal HO--- and ---H, respectively, and the formation of water). For clarity, referring to groups according to Formula(5) as amino acid diradicals does necessitate that the recurring unit is formed from the polycondensation of an amino acid. For example, groups according to Formula(5) can be formed by polycondensation of caprolactams.

For the PPA polymers of interest herein, if recurring unit (R*_{PA}) is represented by Formula (4), then either (i) -M_{A}- and -M*_{A}- are the same and -M_{B}- and -M*_{B}- are distinct or (ii) -M_{A}- and -M*_{A}- are distinct and -M_{B}- and -M*_{B}- are the same. In embodiments in which -M_{A}- and -M*A₋ are the same, -M*_{A}- is represented by Formula (6) and -M*_{B}- is represented a formula selected from the group of formulae consisting of Formula (13) to (15). In some such embodiments, the concentration of recurring unit (R*_{PA}) is from 30 mol% to 50 mol%, relative to the total concentration of recurring units (R_{PA}) and (R*_{PA}). In some embodiments, -M*_{B}- is represented by Formula (15). Preferably -M*_{B}- is a diradical of a dicarboxylic acid selected from the group consisting of adipic acid; heptanedioic acid; octanedioic acid; 1,3-cyclohexanedicarboxylic acid and 1,4-cyclohexanedicarboxylic acid and -M_{B}- is a terephthalic acid diradical. Preferably, -M_{A}- and -M*_{A}- are a diradical of a diamine selected from the group consisting 1,4-butanediamine; 1,6-hexamethylenediamine; and 1,10-decanediamine.

In embodiments in which -M_{A}- and -M*_{A}- are distinct and -M_{B}- and -M*_{B}- are the same, -M*_{A}- is represented by a formula selected from the group consisting of Formulae (6) to (11), preferably the group consisting of Formulae (8) to (11), and -M*_{B}- is represented by Formula (12). In some such embodiments, the concentration of recurring unit (R*_{PA}) is from 5 to 40 mol%, relative to the total concentration of recurring units (R_{PA}) and (R*_{PA}). In some embodiments, -M*_{A}- is a diamine diradical selected from the group consisting of 1,5-diaminopentane; 2-methyl-1,5-diaminopentane; 3-methyl-1,6-hexamethylenediamine; 2,5-dimethyl-1,6-hexamethylenediamine; 2,2,4-trimethyl-1,6-hexamethylenediamine; 2,4,4-trimethyl-1,6-hexamethylenediamine; 1,7-diaminoheptane; 1,3-bis(aminomethyl)cyclohexane ("1,3-BAC"); 1,4-bis(aminomethyl)cyclohexane ("1,4-BAC"); bis(4-aminocyclohexyl)methane ("BACM"); bis(4-amino-3-methylcyclohexyl)methane ("MACM"); 5-amino-1,3,3-trimethylcyclohexanemethylamine ("IPDA"); m-xylylenediamine ("MXDA"); and p-xylylenediamine ("PXDA"). Preferably, -M_{B}- and -M*_{B}- are terephthalic acid diradicals. Preferably, -M_{A}- is a diradical of a diamine selected from the group consisting 1,4-butanediamine; 1,6-hexamethylenediamine; and 1,10-decanediamine.

In other embodiments, as noted above, recurring unit (R*_{PA}) is represented by Formula (5). In some such embodiments, recurring unit (R*_{PA}) is a diradical of an amino acid or lactam selected from the group consisting of 5-aminopentanoic acid, 6-aminohexanoic acid, 7-aminoheptanoic acid; and 11-aminoundecanoic acid. Preferably, -M_{B}- is a terephthalic acid diradical. Preferably, -M_{A}- is a diradical of a diamine selected from the group consisting 1,4-butanediamine; 1,6-hexamethylenediamine; and 1,10-decanediamine.

In some embodiments, the at least one semi-crystalline PPA polymer can include additional recurring units, distinct from recurring unit (R_{PA}) and recurring unit (R*_{PA}). In such embodiments, the total concentration of recurring unit (R_{PA}), recurring unit (R*_{PA}) and other distinct recurring units represented by a formula according to Formula (1), is at least 50 mol%, at least 60 mol%, at least 70 mol%, at least 80 mol%, at least 90 mol%, at least 99 mol% or at least 99.5 mol%, relative to the total number of moles of recurring units in the polymer.

The at least one semi-crystalline PPA polymer includes from 50 mol% to 95 mol% of recurring unit (R_{PA}) and from 5 mol% to 50 mol% of recurring unit (R*_{PA}), relative to the total number of moles of recurring units in the PPA polymer.

As noted above, it was surprisingly found crack-free composites can be formed from a polymer matrix incorporating a semi-crystalline PPA polymer with specifically selected melt profile. The semi-crystalline PPA polymers of interest herein have an inherent viscosity of at least 0.8 deciliters per gram ("dL/g"). In some embodiments, the at least one semi-crystalline PPA polymer has an inherent viscosity of at least 0.9 dL/g or at least 1.0 dL/g. Additionally or alternatively, the PPA polymers can have an inherent viscosity of no more 1.6 dL/g, 1.5 dL/g or 1.4 dL/g. The inherent viscosity can be measured as described in the Examples below. The crystallinity of the PPA polymers can be determined by measuring the heat of the fusion of the PPA polymer. The PPA polymers of interest herein have a heat of fusion of no more than 50 Joules per gram ("J/g"). In some embodiments, the PPA polymers have a heat of fusion of no more than 45 J/g or no more than 40 J/g. The heat of fusion can be measured as described in the examples. Still further, the PPA polymers have a selected thermal window, defined by the difference between T_{d} and Tₘ (T_{d}-Tₘ), of at least 60° C. In some embodiments, the PPA polymers have a thermal windows of no more than 200° C or no more than 120° C. Td and Tm can be measured as described in the examples below.

The concentration of the at least one semi-crystalline PPA polymer in the polymer matrix is at least 50 wt.%, at least 60 wt.%, at least 70 wt.% at least 80 wt.%, at least 90 wt.%, at least 95 wt.% or at least 99.5 wt.%, relative to the total weight of the matrix composition. Of course the at least one semi-crystalline PPA polymer of the polymer matrix can include a plurality of distinct semi-crystalline PPA polymers. In such embodiments, the total concentration of the semi-crystalline PPA polymers is within the ranges described above.

### Additives

In some embodiments, in addition to the at least one semi-crystalline PPA polymer, the polymer matrix can further include optional additives, including but not limited to, antioxidants (e.g. ultraviolet light stabilizers and heat stabilizers), processing aids, nucleating agents, lubricants, flame retardants, a smoke-suppressing agents, anti-static agents, anti-blocking agents, and conductivity additives such as carbon black.

In some embodiments, antioxidants can be particularly desirable additives. Antioxidants can improve the heat and light stability of the polymer matrix in the composite. For example, antioxidants that are heat stabilizers can improve the thermal stability of the composite during manufacturing (or in high heat application settings), for example, by making the polymer processable at higher temperatures while helping to prevent polymer degradation. Additionally, the antioxidants that are light stabilizers can further prevent against polymer degradation during use of the composite application settings where it is exposed to light (e.g. external automobile or aircraft parts). Desirable antioxidants include, but are not limited to, copper salts *(e.g.* CuO and Cu₂O), alkaline metal halides *(e.g.* CuI, KI, and KBr, including combinations of alkaline metal halides such as, but not limited to, CuI/KI), hindered phenols, hindered amine light stabilizers ("HALS") (e.g. tertiary amine light stabilizers) and organic or inorganic phosphorous-containing stabilizers (e.g. sodium hypophosphite or manganese hypophosphite).

The total concentration of additives in the polymer matrix is 0 wt.%, at least 0.1 wt.%, at least 0.2 wt.%, at least 0.3 wt.%, or at least 0.4 wt.%, relative to the total weight of the polymer matrix. Additionally or alternatively, the total concentration of additives in the polymer matrix is no more than 10 wt.%, no more than 8 wt.%, no more than 6 wt.%, no more than 5 wt.%, no more than 4 wt.%, no more than 3 wt.%, no more than 2 wt.% or no more than 1 wt.%, relative to the total weight of the polymer matrix.

### The Reinforcing Fibers

The thermoplastic composite includes at least one continuous reinforcing fiber. The at least one continuous reinforcing fiber is selected from glass fiber, carbon fibers, aluminum fiber, titanium fiber, magnesium fiber, boron carbide fibers, rock wool fiber, steel fiber, aramid fiber, natural fiber *(e.g.* cotton, linen and wood) and any combination of one or more, thereof. Preferably, the at least one continuous reinforcing fiber is glass fiber or carbon fiber. The at least one reinforcing fiber is continuous reinforcing fibers, meaning they have an average length in the longest dimension of at least 5 millimeters ("mm"), at least 10 mm, at least 25 mm or at least 50 mm.

The thermoplastic composite includes at least 20 wt.%, at least 25 wt.%, at least 30 wt.%, at least 35 wt.%, at least 40 wt.%, at least 45 wt.%, at least 50 wt.% or at least 55 wt.% of the continuous reinforcing fiber, relative to the total weight of the thermoplastic composite. Additionally or alternatively, the thermoplastic composite includes no more than 80 wt.%, no more than 75 wt.%, no more than 70 wt.%, no more than 65 wt.% or no more than 60 wt.% of the continuous reinforcing fiber, relative to the total weight of the thermoplastic composite. In embodiments in which the at least one continuous reinforcing fiber is a plurality of continuous reinforcing fibers, the total concentration of continuous reinforcing fibers is within the ranges above.

### The Composites and Composite Fabrication

The composites include the reinforcing fiber impregnated with the polymer matrix. In some embodiments, the composites can be unidirectional composites. In other embodiments, the composite can be a multidirectional composite, in which the fibers have a more complex structure.

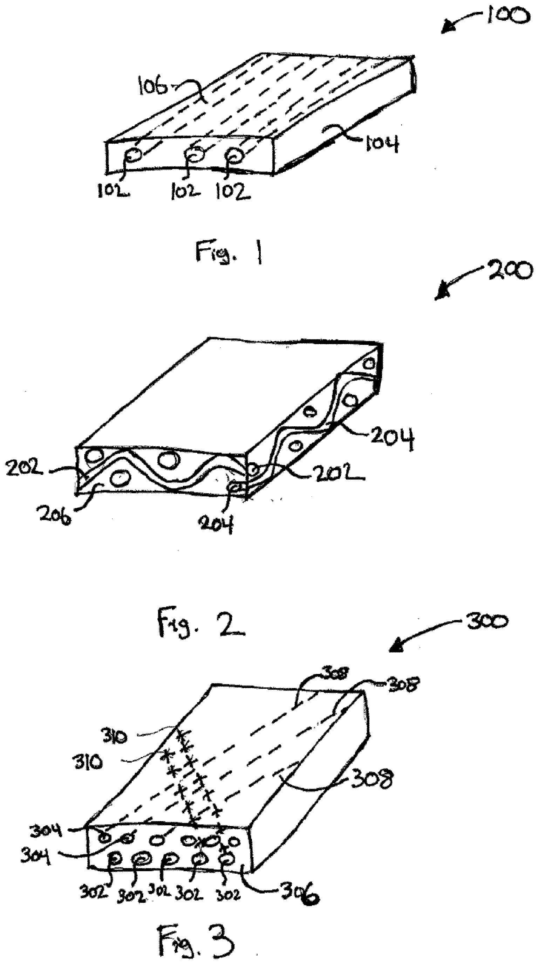

With respect to unidirectional composites (*e.g.* tapes), the orientation of the reinforcing fibers within the polymer matrix material is generally aligned along the length of the reinforcing fibers (the longest dimensions of the fiber). Unidirectional composites are also sometimes referred to as composite tapes. Fig. 1 is a schematic depiction showing a perspective view of an embodiment unidirectional composite. Referring to Fig. 1, tape 100 includes reinforcing fibers 102 and polymer matrix 104. Reinforcing fibers 102 are generally aligned along their length. Dashed lines 106 (not all labelled, for clarity) denote the orientation of continuous reinforcing fibers 102. As used herein, generally aligned fibers are oriented such that at least 70%, at least 80%, at least 90% or at least 95% of the reinforcing fibers have length that is within 30 degrees, within 25 degrees, within 20 degrees, within 15 degrees, or within 10 degrees along a length of one of the fibers.

In other embodiments, the composite can be a multidirectional composite (e.g. laminate). As noted above, unidirectional composites have fibers that are generally aligned along a single direction. Because the tensile strength of the composite is greater along the length of the fiber, unidirectional composites have excellent tensile strength along a single dimension, and reduced tensile strength along other (*e.g.* perpendicular) directions. In contrast, multidirectional composites have reinforcing fibers aligned along multiple dimensions and, therefore, have improved tensile strength in multiple dimensions (*e.g.* more isotropic). In such embodiments, the reinforcing fibers in the polymer matrix can be arranged as a woven fabric or a layered fabric or any combination of one or more therefore. Fig. 2 is a schematic depiction showing a perspective view of an embodiment of a multidirectional composite in which the reinforcing fibers are oriented as a woven fabric. Referring to Fig. 2, multidirectional composite 200 includes polymer matrix 206 and reinforcing fibers 202 and 204, which are generally perpendicular to each other. For clarity, not all reinforcing fibers are labelled in Fig. 2. In some embodiments, each reinforcing fibers 202 and 204 can include bundle of reinforcing fibers. For example, in some embodiments, reinforcing fibers 202 and 204 can be a yarn or layer *(e.g.* a planar distribution of single reinforcing fibers adjacent each other) of reinforcing fibers. Fig. 3 is a schematic depiction showing a perspective view of an embodiment of a multidirectional composite in which the continuous reinforcing fibers are oriented as a layered fabric. Referring to Fig. 3, multidirectional composite 300 includes reinforcing fibers 302 and 304 and polymer matrix 306. For clarity, not all reinforcing fibers 304 are labelled. Reinforcing fibers 302 and 304 are present in polymer matrix 306 as different layers, with the reinforcing fibers 302 generally aligned parallel with each other and reinforcing fibers 304 generally aligned parallel with each other. Reinforcing fibers 302 are also generally aligned at an angle with reinforcing fibers 304. Dashed lines 308 indicate the alignment of fiber 304 within the multidirectional composite 300. Pluses ("+") 310 indicate the alignment of fibers 302 within multidirectional composite 300. For clarity, not all fibers 302 and 304 are indicated with dashed lines or pluses. In some embodiments, the angle between fibers 302 and 304 along their respective lengths is at least 15 degrees, at least 30 degrees or at least 40 degrees and no more than about 75 degrees, no more than about 60 degrees or no more than about 50 degrees. Of course, the layered fabric can have additional layers of reinforcing fibers, aligned at the same angle or different angles as the reinforcing fibers in another layer in the multidirectional composite.

The composites can be fabricated by methods well known in the art. In general, regardless of the type of method, composite fabrication includes impregnation of the reinforcing fibers with the polymer matrix material ("melt impregnation"), and subsequent cooling to room temperature (20° C to 25° C) form the final solid composite. The melt impregnation includes contacting the reinforcing fibers with a melt of the polymer matrix material. To make the polymer matrix material processable, the melt is at a temperature of at least Tm* to less than Td*, where Tm* is the melt temperature of the PPA polymer in the polymer matrix having the highest melt temperature and Td* is the onset decomposition temperature of the PPA polymer having the lowest onset decomposition temperature in the melt. In some embodiments, melt impregnation can further include mechanical compression of the melt against the fibers. For example, in thermo-pressing, the polymer matrix material is heated to form a melt and mechanically compressed against the fibers simultaneously. In other melt impregnation embodiments incorporating mechanical compression, the fibers can first be contacted with the melt and subsequently mechanically compressed. Subsequent to melt impregnation, the impregnated reinforcing fibers are cooled to form a solid composite. In some embodiments, the composite can be shaped to a desired geometry prior to be cooled to room temperature. In some such embodiments, subsequent to melt impregnation or prior to or during cooling, the impregnated reinforcing fibers can be passed through a die to form the composite having the desired geometry.

One example of a composite fabrication method includes pultrusion. In pultrusion, a plurality of fibers are aligned along their length and pulled in a direction along their length. In some embodiments, the plurality of fibers is delivered from a spool(s) of the reinforcing fiber. To impregnate the fibers, the fibers are pulled through a bath including a melt of the polymer matrix. After being pulled through the melt, in some embodiments, the impregnated fibers can be further heated to further aid in the impregnation. Additionally or alternatively, the impregnated fibers can be pulled through a die and to provide the desired shape to the composite, prior to cooling to room temperature. Pultrusion can be particularly desirable in the formation of unidirectional composites. Another example of a composite fabrication method includes a slurry process. In a slurry process, a slurry is formed by adding the polymer matrix, in powdered form, to a liquid medium to create a suspension. The slurry is coated onto a surface of the fibers, for example, by passing the fibers through a bath of the slurry. Subsequently, the coated fibers are then heated and consolidated (e.g. by heated mechanical rollers). Slurry fabrication can be desirable for the formation of composite tapes. Yet another example of a composite fabrication method involves direct powder deposition. In such a method, the polymer matrix, in powder form, is deposited onto the surface of the fibers and subsequently heated to melt the polymer matrix. Direct powder deposition can be desirable to form woven fabric compositions.

In some embodiments, composited can be formed by thermopressing of a two or more composites. In such embodiments, two or more composites can be thermo-pressed *(e.g.* heated and mechanically pressed together) to form a new composite. For example, referring to Fig. 3, composite 300 can be formed by thermopressing two unidirectional composites (e.g. composite 100), oriented such the reinforcing fibers of each composite are at the desired angle to one another. As another example, referring to Fig. 2, one or more composites according to composite 200 can be pressed together to form another composite. In some such embodiments, prior to thermopressing, each composite can be oriented to achieve the desired relative fiber alignment between each of the composites being thermopressed.

In some embodiments, the composite can be overmolded with another polymer composition. In some such embodiments, a polymer composition including reinforcing fibers can be injection molded onto a portion of the composite. In such embodiments, the reinforcing fibers generally have a length of less than 5 mm. In one embodiment, a polymer composition including a polyamide and reinforcing glass or carbon fibers can be injection molded onto at least a portion of the thermoplastic composite. The polyamide can be an amorphous or semi-crystalline polyamide, preferably a semi-crystalline polyamide.

### Articles

The thermoplastic composites described herein can be desirably incorporated into articles for use in a wide variety of application settings. With respect to automotive applications, the thermoplastic composites can be integrated into automotive components including, but not limited to, pans *(e.g.* oil pans), panels *(e.g.* exterior body panels, including but not limited to quarter panels, trunk, hood; and interior body panels, including but not limited to, door panels and dash panels), side-panels, mirrors, bumpers, bars (e.g., torsion bars and sway bars), rods, suspensions components (e.g., suspension rods, leaf springs, suspension arms), and turbo charger components (e.g. housings, volutes, compressor wheels and impellers). The thermoplastic composites described herein can also be desirably integrated into aerospace components, oil and gas drilling components (e.g. downhole drilling tubes, chemical injection tubes, undersea umbilicals and hydraulic control lines) and mobile electronic device components.

## Claims

1. A thermoplastic composite comprising :
at least 20 wt.%, relative to the total weight of the thermoplastic composite, of a polymer matrix comprising at least one semi-crystalline polyphthalamide ("PPA") polymer and
at least 20 wt.%, relative to the total weight of the thermoplastic composite, of at least one continuous reinforcing fiber;
wherein the at least one semi-crystalline PPA polymer comprises, relative to the total number of moles of recurring units in the PPA polymer, from 50 mol% to 95 mol% of a recurring unit (R_{PA}) and from 5 mol% to 50 mol% of a recurring unit (R*_{PA}) and wherein :
(i) recurring unit (R_{PA}) is represented by the following formula :
[-M_{A}-M_{B}-] (1)
wherein
- -M_{A}- and -M_{B}- are represented by the following formulae, respectively: 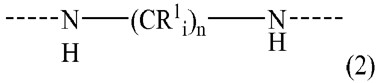 and 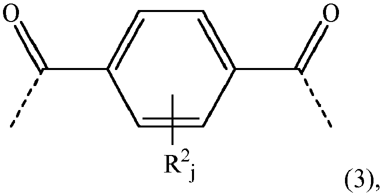 and
- R¹ and R², at each instance, is independently selected from the group consisting of a halogen, an alkyl, an alkenyl, an ether, a thioether, an ester, an amide, an imide, an alkali or alkaline earth metal sulfonate, an alkyl sulfonate, an alkali or alkaline earth metal phosphonate, an alkyl phosphonate, an amine, and an quaternary ammonium;
- i, at each instance, is an integer from 0 to 2;
- j is an integer from 0 to 4; and
- n is 4, 6 or 10
(ii) Recurring unit (R*_{PA}) is represented by either one of following formulae :
[-M*_{A}-M*_{B}-], (4)
and 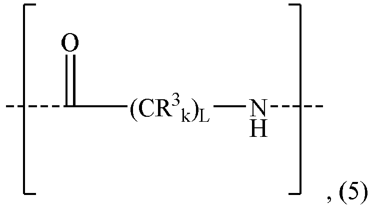 wherein
- -M*_{A}- is represented by a formula selected from the following group of formulae : 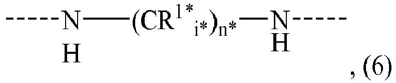 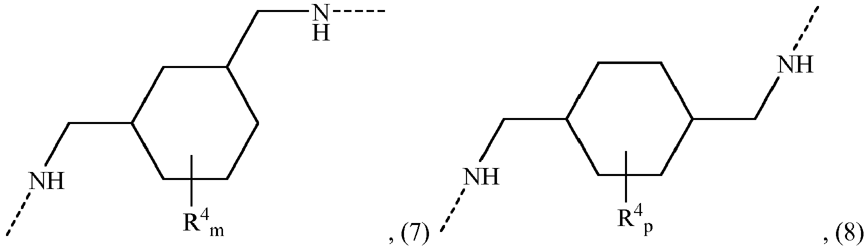 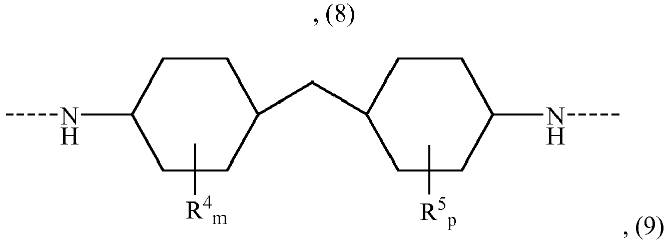 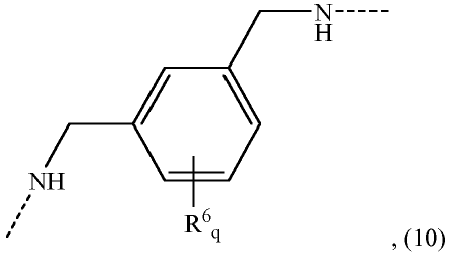 and 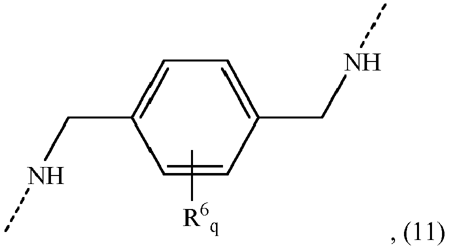
- and -M*_{B}- is represented by a formula selected from the following group of formulae : 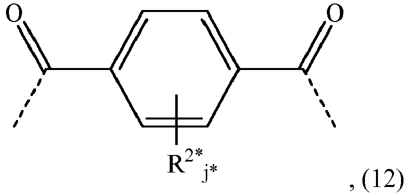 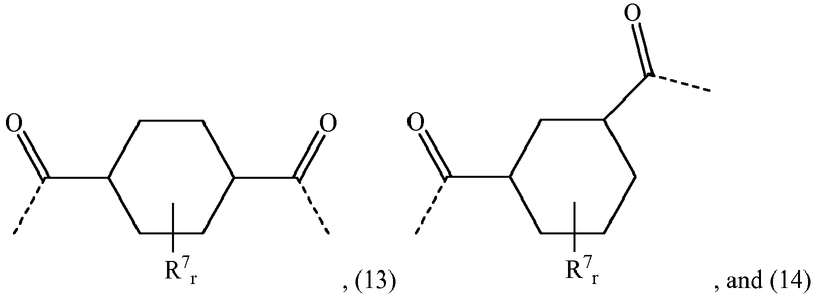 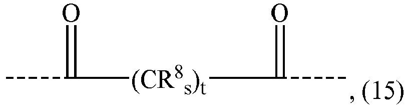
- R^{1*}, R^{2*} and R³ to R⁸, at each instance, is independently selected from the group consisting of a halogen, an alkyl, an alkenyl, an ether, a thioether, an ester, an amide, an imide, an alkali or alkaline earth metal sulfonate, an alkyl sulfonate, an alkali or alkaline earth metal phosphonate, an alkyl phosphonate, an amine, and an quaternary ammonium;
- i*, k and s, at each instance, are independently selected integers from 0 to 2;
- L is an integer from 5 to 12;
- n* is 5 to 7, preferably 4, 6 or 10;
- t is an integer from 6 to 18;
- m, p and r are independently selected integers from 0 to 8; and
- j* and q are independently selected integers from 0 to 4;
wherein if recurring unit (R*_{PA}) is represented by Formula (4) either :
(i) -M_{A}- and -M*_{A}- are the same and -M_{B}- and -M*_{B}- are distinct; and
(ii) -M*_{A}- is represented by Formula (6) and -M*_{B}- is represented a formula selected from the group of formulae consisting of Formulae (13) to (15);
or
(i) -M_{A}- and -M*_{A}- are distinct and -M_{B}- and -M*_{B}- are the same and
(ii) -M*_{A}- is represented by a formula selected from the group consisting of Formulae (6) to (11), preferably the group consisting of Formulae (8) to (11), and -M*_{B}- is represented by Formula (12).

2. The composite of claim 1, wherein the continuous reinforcing fiber is selected from the group consisting of glass fiber, carbon fiber, or a combination thereof; preferably either glass fiber or carbon fiber; most preferably carbon fiber.

3. The composite of either claim 1 or 2, wherein the concentration of the reinforcing fiber is at least 30 wt.%, preferably at least 35 wt.%, more preferably at least 40 wt.%, even more preferably at least 45 wt.%, still more preferably at least 50 wt.% and no more than about 70 wt.%, preferably no more than about 65 wt.%, relative to the total weight of the thermoplastic composite.

4. The composite of any one of claims 1 to 3, wherein the thermoplastic composite is a unidirectional composite.

5. The composite of claim 4, wherein the reinforcing fibers are oriented as a tape.

6. The composite of any one of claims 1 to 3, wherein the thermoplastic composite is a multidirectional composite.

7. The composite of claim 6, wherein the reinforcing fibers are in a configuration selected from the group consisting of a woven fabric, a layered fabric, or a combination thereof.

8. The composite of any one of claims 1 to 7, wherein -M_{A}- and -M*_{A}- are the same and -M_{B}- and -M*_{B}- are distinct and wherein
(i) -M*_{B}- is a diradical of a dicarboxylic acid selected from the group consisting of adipic acid; heptanedioic acid; octanedioic acid; 1,3-cyclohexanedicarboxylic acid and 1,4-cyclohexanedicarboxylic acid;
(ii) -M_{B}- is a terephthalic acid diradical and
(iii) -M_{A}- and -M*_{A}- are a diradical of a diamine selected from the group consisting 1,4-butanediamine; 1,6-hexamethylenediamine; and 1,10-decanediamine and
(iv) the concentration of recurring unit (R*_{PA}) is from 30 mol% to 50 mol%, relative to the total concentration of recurring units (R_{PA}) and (R*_{PA}).

9. The composite of any one of claims 1 to 7, wherein -M_{A}- and -M*_{A}- are distinct and -M_{B}- and -M*_{B}- are the same and wherein
(i) -M*_{A}- is a diamine diradical selected from the group consisting of 1,5-diaminopentane; 2-methyl-1,5-diaminopentane; 3-methyl-1,6-hexamethylenediamine; 2,5-dimethyl-1,6-hexamethylenediamine; 2,2,4-trimethyl-1,6-hexamethylenediamine; 2,4,4-trimethyl-1,6-hexamethylenediamine; 1,7-diaminoheptane; 1,3-bis(aminomethyl)cyclohexane ("1,3-BAC"); 1,4-bis(aminomethyl)cyclohexane ("1,4-BAC"); bis(4-aminocyclohexyl)methane ("BACM"); bis(4-amino-3-methylcyclohexyl)methane ("MACM"); 5-amino-1,3,3-trimethylcyclohexanemethylamine ("IPDA"); m-xylylenediamine ("MXDA"); and p-xylylenediamine ("PXDA");
(ii) -M_{A}- is a diradical of a diamine selected from the group consisting 1,4-butanediamine; 1,6-hexamethylenediamine; and 1,10-decanediamine; and
(iii) -M_{B}- and -M*_{B}- are terephthalic acid diradicals and
(iv) the concentration of recurring unit (R*_{PA}) is from 5 to 40 mol%, relative to the total concentration of recurring units (R_{PA}) and (R*_{PA}).

10. The composite of any one of claims 1 to 7, wherein recurring unit (R*_{PA}) is represented by Formula (5) and wherein
(i) -M_{A}- is a diradical of a diamine selected from the group consisting 1,4-butanediamine; 1,6-hexamethylenediamine; and 1,10-decanediamine;
(ii) -M_{B}- is a terephthalic acid diradical; and
(iii) recurring unit (R*_{PA}) is a diradical of an amino acid selected from the group consisting of 5-aminopentanoic acid, 6-aminohexanoic acid, 7-aminoheptanoic acid; and 11-aminoundecanoic acid.

11. The composite of any one of claims 1 to 10, wherein the polymer matrix comprises at least 70 wt.%, preferably at least 80 wt.%, more preferably at least 85 wt.%, still more preferably at least 90 wt.%, most preferably at least 95 wt.% of the at least one semi-crystalline PPA polymer, relative to the total weight of the polymer matrix.

12. The composite of any one of claims 1 to 11, further comprising, relative to the total weight of the polymer matrix, from about 0.1 to about 10 wt.%, preferably to about 5 wt.% of at least one additive selected from the group consisting of antioxidants, processing aids, nucleating agents, lubricants, flame retardants, smoke-suppressing agents, anti-static agents, anti-blocking agents, and conductivity additives.

13. The composite of any one of claims 1 to 12, wherein the concentration of the polymer matrix is at least 30 wt.%, preferably at least 35 wt.%, and no more than 80 wt.%, preferably no more than 70 wt.%, more preferably no more than 60 wt.%, still more preferably no more than 50 wt.%, relative to the total weight of the thermoplastic composite.

14. An article comprising the thermoplastic composite of any one of claims 1 to 13, wherein the article is selected from the group consisting of an automotive component, an aerospace components, oil and gas drilling components and a mobile electronic device components.

15. A method for making the composite of any one of claims 1 to 13, the method comprising
(i) impregnating the reinforcing fibers with the polymer matrix, wherein the impregnating comprises contacting the reinforcing fibers with the a melt of the polymer matrix material, wherein the melt is at a temperature of at least Tm* to less than Td*, where Tm* is the melt temperature of the PPA polymer in the polymer matrix having the highest melt temperature, and Td* is the onset decomposition temperature of the PPA polymer having the lowest onset decomposition temperature in the melt.
(ii) cooling the impregnated reinforcing fibers to room temperature.
